# EUROPEAN PATENT APPLICATION

(11) **EP 4 279 411 A1**
(43) Date of publication of application: **22.11.2023**
(21) Application number: 22739339.4
(22) Date of filing: 07.01.2022
(51) Int. Cl.: B65D 35/02, B65D 1/00, B65D 35/08

(54) **MULTILAYER TUBE CONTAINER**

(30) Priority: 12.01.2021 JP 2021003051
(71) Applicant: Taisei Kako Co., Ltd., Kita-ku Osaka-shi Osaka 531-0072 (JP)
(72) Inventor: OHNISHI, Kenji, Ibaraki-shi Osaka 567-0054 (JP); MATSUSHITA, Yoshihiro, Ibaraki-shi Osaka 567-0054 (JP); NABETA, Muneaki, Ibaraki-shi Osaka 567-0054 (JP)
(74) Representative: Dehns
(86) International application number: PCT/JP2022/000322
(87) International publication number: WO 2022/153930

(57) **Abstract**

A multilayer tube container including a tube container body containing a low-density polyethylene, the tube container including, on an outer surface of the tube container body: an oxygen barrier layer formed from a cation-polymerizable ultraviolet-curing composition; and a digital ink layer, in this order from the tube container body side.

## Description

### Technical Field

An embodiment of the present invention relates to a multilayer tube container.

### Background Art

Conventionally, as a container for pharmaceutical products, quasi-pharmaceutical products, cosmetics, and others in a liquid, cream, or other state, tube containers having: a head part composed of a mouth part and a shoulder part; and a drum part continuing from the shoulder part have been used.

The body of such a tube container (Hereinafter, a tube container on which a printed layer or others are not formed is also referred to as "tube container body".) is manufactured by extrusion molding from the viewpoint that a tube container body having a desired shape can be easily formed, for example.

Meanwhile, it is also known that a tube container body is manufactured by injection molding (for example, Patent Literature 1). An injection-molded tube container body is formed by using a predetermined mold to form a molded product having: a head part composed of a mouth part and a shoulder part; and a drum part continuing from the shoulder part, and subsequently sealing the drum part's end opposite to the head part side.

The tube container body as described above is usually provided with a printed layer for the purpose of improving the design of the appearance and displaying the contents. In recent years, it has been considered to form such a printed layer by digital printing, from the viewpoint of enabling small-lot production, requiring no printing plate, being capable of coping with various designs, and others.

### Citation List

### Patent Literature

Patent Literature 1: JP 5941459 B2

### Summary of Invention

### Technical Problem

A tube container used for pharmaceutical products, quasi-pharmaceutical products, cosmetics, and others in a liquid, cream, or other state is usually used by squeezing the container so as to push out the contents, and thus is required to have excellent flexibility. For this reason, the drum part (the part to accommodate the contents) of the tube container body is usually required to have a thin thickness of about 1.0 mm or less.

Note that a digital ink to be used for digital printing as described above usually needs to pass through a head having a very small diameter, and is an extremely low-viscosity composition.

It has been found that when such a low-viscosity digital ink is printed on a thin tube container body, components in the digital ink (which are in particular considered to be a polymerization initiator) transfer to the tube container body, and the components further transfer (migrate) to the inner surface of the tube container body through the thin tube container.

When such migration occurs, the contents of the tube container and the components in the digital ink are mixed, so that the contents are contaminated. Therefore, it is required to suppress the migration from the viewpoint of suppressing performance deterioration of the contents, safety of using the contents, or others.

As a method for suppressing the migration, it has been studied to use a low migration ink, in which the amount of a polymerization initiator (photoinitiator) in the digital ink is reduced. However, it has been found that, even when the low migration ink is used, migration to the inner surface of the container body cannot be sufficiently suppressed in the case of the thin tube container body as described above.

As a method of suppressing the migration, it is conceivable to provide another layer between the tube container body and the digital ink layer. However, it is generally considered that when such another layer is present, a crack occurs in the another layer upon the squeeze as described above, and the crack may generate a crack also in the digital ink layer, resulting in the another layer and the digital ink layer peeling and dropping off.

In an embodiment of the present invention, provided is a multilayer tube container that can suppress the transition (migration) of components in a digital ink to the inner surface of the tube container body.

### Solution to Problem

As a result of intensive studies to solve the above problems, the present inventors have found that the above problems can be solved by the following configuration examples, and have completed the present invention.

The configuration examples of the present invention are as follows.

[1] A multilayer tube container including
   a tube container body containing a low-density polyethylene,
   the tube container including, on an outer surface of the tube container body: an oxygen barrier layer formed from a cation-polymerizable photocuring composition; and a digital ink layer, in this order from the tube container body side.
[2] The multilayer tube container according to [1], wherein the cation-polymerizable photocuring composition contains: a cation-polymerizable component (a) including an alicyclic epoxy compound; and a cationic polymerization initiator (b).
[3] The multilayer tube container according to [1] or [2], wherein
   the tube container body is a tube container having: a head part composed of a mouth part and a shoulder part; and a drum part continuing from the shoulder part,
   the tube container being an injection-molded tube container in which the head part and the drum part are integrally molded.
[4] The multilayer tube container according to [3], wherein the drum part of the tube container body has a thickness of 1.0 mm or less.
[5] The multilayer tube container according to any of [1] to [4], wherein the oxygen barrier layer has a thickness of 7 to 12 um.

### Advantageous Effects of Invention

According to an embodiment of the present invention, it is possible to provide a multilayer tube container that can suppress the migration of components in a digital ink to the inner surface of the tube container body.

In particular, according to an embodiment of the present invention, it is possible to provide a multilayer tube container that, even when a digital ink layer is formed on an excellently flexible tube container body having a drum part with a thickness of 1.0 mm or less, can suppress the migration of components in the digital ink to the inner surface of the tube container body.

### Brief Description of Drawings

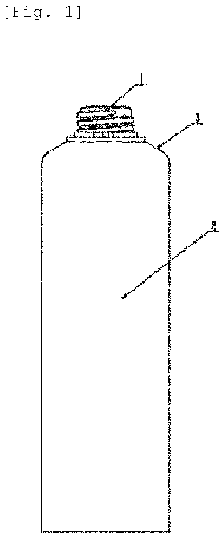

Fig. 1 is a schematic view illustrating an example of the side view of a multilayer tube container (or a tube container body) according to an embodiment of the present invention.

### Description of Embodiments

### <<Multilayer Tube Container>>

The multilayer tube container (Hereinafter, it is also referred to as "the present container".) according to an embodiment of the present invention includes a tube container body containing a low-density polyethylene,
the tube container including, on an outer surface of the tube container body: an oxygen barrier layer formed from a cation-polymerizable photocuring composition; and a digital ink layer, in this order from the tube container body side.

The application of the present container is not particularly limited, and examples thereof include application such as using, storing, transporting, and others of: pharmaceutical products; quasi-pharmaceutical products; cosmetics; food; materials for construction, civil engineering, and agriculture; and others in a liquid, cream, or other state. Application of using, storing, transporting, and others of liquid foundation, cream, facial foam, and others is more preferable.

### <Tube Container Body>

The tube container body is not particularly limited as long as it contains a low-density polyethylene.

The low-density polyethylene may be a biomass-derived resin or a fossil fuel-derived resin, and is preferably an injection-moldable resin.

The low-density polyethylene contained in the tube container body may be one kind alone or two or more kinds.

The tube container body may contain, as necessary, components such as: a thermoplastic resin; an antioxidant; a stabilizer, such as a heat resistant stabilizer, a light resistant stabilizer, and a weather resistant stabilizer; an ultraviolet scattering agent; a slip preventing agent; an antifogging agent; a colorant; a dispersant; a filler; an antistatic agent; a lubricant; a softener; a plasticizer; and a processing aid, as long as the effect of the present invention is not impaired.

The tube container body may contain each one kind alone, or two or more kinds of these other components.

The tube container body is not particularly limited, but is preferably an injection-molded tube container body formed by injection molding from the viewpoint that a desirably shaped container body can be easily formed, for example.

As shown in Fig. 1, the tube container body usually has a head part composed of shoulder part 3 and mouth part 1, and drum part 2 continuing from the shoulder part 3.

The thickness of the drum part of the tube container body may be appropriately selected according to a desired application, but is preferably 1.0 mm or less, more preferably 0.5 to 1.0 mm, still more preferably 0.5 to 0.9 mm, and particularly preferably 0.5 to 0.8 mm from the viewpoint that the present container can be easily squeezed when the present container is used by squeezing so as to extrude the contents, and that the present container with excellent flexibility can be easily obtained, for example.

The tube container body containing a low-density polyethylene is preferable because the tube container body is easy to make an injection-molded tube container body whose drum part has such a thickness, and further becomes an injection-molded tube container body excellent in injection moldability, flexibility, and stress cracking resistance, even when the drum part has such a thickness.

The length of the drum part of the tube container body may also be appropriately selected according to a desired application, and is preferably 10 cm or more, more preferably 11 cm or more, particularly preferably 14 cm or more, and more preferably 20 cm or less, particularly preferably 16 cm or less.

The tube container body containing a low-density polyethylene is preferable because the tube container body is easy to make an injection-molded tube container body having such a length, and further becomes an injection-molded tube container body excellent in injection moldability, flexibility, and stress cracking resistance, even when the drum part has such a length.

### [Method for Manufacturing Tube Container Body]

The tube container body can be manufactured by injection-molding each of the components constituting the tube container body.

When a plurality of kinds of components are used, it is preferable to injection-mold a composition after mixing these blended components to form the composition or while forming the composition.

The method for forming the composition is not particularly limited, and it is preferable to melt-kneading each of the components using a conventionally known apparatus, specifically, such as a single-screw extruder, a twin-screw extruder, a kneader, a mixer, and a two-roll mill.

The MFR of the raw material of the tube container body measured on the basis of JIS K 7210 (190°C, 21.18 N load) is preferably 15 to 80 g/10 min from the viewpoint of obtaining an injection-molded tube container body excellent in: moldability, especially injection moldability; and mechanical strength, such as shock resistance, for example.

Examples of the conditions for the injection molding include conditions in which the injection speed is preferably 60 mm/s or less, more preferably 50 mm/s or less, and the injection temperature (cylinder temperature) is preferably 250°C or less, more preferably 240°C or less, and particularly preferably 230°C or less.

The fact that the tube container body having the above shape can be injection-molded under such conditions means that the tube container body has such an injection moldability that it can be put to practical use. When the MFR of the raw material of the tube container body is 1.0 g/10 minutes or more, the tube container body having the above shape can be injection-molded under such conditions.

The tube container body containing a low-density polyethylene has the above shape and, in addition, is excellent in stress cracking resistance even when manufactured under such injection molding conditions.

The tube container body is preferably an injection-molded tube container body in which the head part and the drum part are integrally molded.

Integral molding is preferable, because: the step of combining the head part and the drum part can be omitted; a complicated and troublesome step is unnecessary; the cost can be reduced; and deterioration in quality such as adhesion of foreign matter and reduction in welding strength between the head part and the drum part hardly occurs.

Such an integrally molded, injection-molded tube container body can be specifically manufactured by the following method.

Specifically, an injection molding mold capable of integrally forming a mouth part, a shoulder part, and a drum part is used, and for example, each of the components constituting the tube container body or the above composition is injected thereto to obtain the integrally molded, injection-molded tube container body.

At the time of the injection, it is preferable to inject each of the components constituting the tube container body or the above composition into a cavity through at least two or more pouring gates. Since injection can be performed under uniform pressure by using two or more pouring gates, a tube container body having a desired shape can be easily obtained.

The integrally molded product of the head part and the drum part obtained as described above can be formed into the tube container body by welding the drum part's end opposite to the head part side.

As a welding method, a conventionally known welding method, such as hot air, ultrasonic welding, and thermal sealing, can be adopted without limitation.

### <Oxygen Barrier Layer>

The oxygen barrier layer is not particularly limited as long as it is a layer formed from a cation-polymerizable photocuring composition.

It is considered that the oxygen barrier layer formed from such a cation-polymerizable photocuring composition undergoes a curing reaction with time even after curing by light irradiation. Therefore, it is considered that: the present container is provided with such an oxygen barrier layer between the tube container body and the digital ink layer; even if migration of components in the digital ink such as a polymerization initiator occurs from the digital ink layer to the oxygen barrier layer, the components are used for the curing reaction in the oxygen barrier layer; thereby the migration of the components in the digital ink to the inner surface of the tube container body can be sufficiently suppressed.

The oxygen barrier layer is usually formed on the drum part of the present container. In this case, the oxygen barrier layer may be formed on the entire surface of the drum part, or may be formed on a part of the drum part.

The oxygen barrier layer included in the present container may be two or more layers, but is usually one layer.

The oxygen barrier layer is preferably a layer obtained by photocuring a cation-polymerizable photocuring composition that contains: a cation-polymerizable component (a) containing an alicyclic epoxy compound; and a cationic polymerization initiator (b) from the viewpoint that the oxygen barrier layer is excellent in oxygen barrier property and adhesion to the tube container body, and hardly generates a crack, for example.

### [Cation-Polymerizable Component (a)]

The cation-polymerizable component (a) contains an alicyclic epoxy compound (Hereinafter, it is also referred to as "compound (a1)".). The component (a) may be a component composed only of the compound (a1) or may contain other components, such as an aliphatic epoxy resin (a2).

### [Alicyclic Epoxy Compound]

Examples of the compound (a1) include: a polyglycidyl ether of a polyhydric alcohol having at least one aliphatic ring; a cyclohexene oxide-containing or cyclopentene oxide-containing compound obtained by epoxidizing a cyclohexene ring-containing or cyclopentene ring-containing compound with an oxidizing agent.

Specific examples of the compound (a1) include hydrogenated bisphenol A diglycidyl ether, 3,4-epoxycyclohexylmethyl-3,4-epoxycyclohexanecarboxylate, 3,4-epoxy-1-methylcyclohexyl-3,4-epoxy-1-methylhexanecarboxylate, 6-methyl-3,4-epoxycyclohexylmethyl-6-methyl-3,4-epoxycyclohexanecarboxylate, 3,4-epoxy-3-methylcyclohexylmethyl-3,4-epoxy-3-methylcyclohexanecarboxylate, 3,4-epoxy-5-methylcyclohexylmethyl-3,4-epoxy-5-methylcyclohexanecarboxylate, 2-(3,4-epoxycyclohexyl-5,5-spiro-3,4-epoxy) cyclohexane-meta-dioxane, bis(3,4-epoxycyclohexylmethyl) adipate, 3,4-epoxy-6-methylcyclohexylcarboxylate, methylene bis(3,4-epoxycyclohexane), dicyclopentadiene diepoxide, ethylene bis(3,4-epoxycyclohexanecarboxylate), dioctyl epoxyhexahydro phthalate, di-2-ethylhexyl epoxyhexahydro phthalate, 1-epoxyethyl-3,4-epoxycyclohexane, 1,2-epoxy-2-2-epoxyethylcyclohexane, 3,4-epoxycyclohexylmethyl acrylate, and 3,4-epoxycyclohexylmethyl methacrylate.

The compound (a1) contained in the component (a) may be one kind or two or more kinds.

Examples of a commercially available product that can be suitably used as the compound (a1) include: CELLOXIDE 2021, CELLOXIDE 2021P, CELLOXIDE 2081, CELLOXIDE 2083, CELLOXIDE 2085, CELLOXIDE 2000, CELLOXIDE 3000, CYCLOMER A200, CYCLOMER M100, CYCLOMER M101, EPOLEAD GT-301, EPOLEAD GT-302, EPOLEAD 401, EPOLEAD 403, ETHB, and EPOLEAD HD300 (The above are manufactured by Daicel Corporation.); and KRM-2110 and KRM-2199 (The above are manufactured by ADEKA CORPORATION.); and others.

The compound (a1) is preferably an epoxy compound having a cyclohexene oxide structure from the viewpoint of curability (curing rate).

The compound (a1) is contained in an amount of preferably 97 mass% or more, more preferably 98 mass% or more, and preferably 100 mass% or less, more preferably 99 mass% or less, with respect to 100 mass% of the component (a) from the viewpoint that it is possible to easily obtain an oxygen barrier layer that is excellent in oxygen barrier property and adhesion to the tube container body and hardly generates a crack, for example.

### [Aliphatic Epoxy Compound (a2)]

The component (a) may contain an aliphatic epoxy compound (a2). When the compound (a1) and the compound (a2) are used in combination, the viscosity of the resulting composition can be reduced, and a cation-polymerizable photocuring composition excellent in coatability can be easily obtained.

Examples of the compound (a2) include: polyglycidyl ethers of an aliphatic polyhydric alcohol or an alkylene oxide adducts thereof; polyglycidyl esters of an aliphatic long-chain polybasic acid; homopolymers of glycidyl acrylate or glycidyl methacrylate; and copolymers of at least one selected from glycidyl acrylate and glycidyl methacrylate and one or two or more other vinyl monomers.

Specific examples of the compound (a2) include: a glycidyl ether of a polyhydric alcohol, such as 1,4-butanediol diglycidyl ether, 1,6-hexanediol diglycidyl ether, triglycidyl ether of glycerin, triglycidyl ether of trimethylolpropane, tetraglycidyl ether of sorbitol, hexaglycidyl ether of dipentaerythritol, diglycidyl ether of polyethylene glycol, and diglycidyl ether of polypropylene glycol; a polyglycidyl ether of a polyether polyol obtained by adding one or two or more kinds of alkylene oxide to an aliphatic polyhydric alcohol, such as propylene glycol, trimethylolpropane, and glycerin; a diglycidyl ester of an aliphatic long chain dibasic acid; a monoglycidyl ether of an aliphatic higher alcohol, and a monoglycidyl ether of phenol, cresol, butylphenol, and a polyether alcohol obtained by adding an alkylene oxide thereto; a diglycidyl ester of a higher fatty acid; epoxidized soybean oil; octyl epoxystearate; butyl epoxystearate; and epoxidized polybutadiene.

When the component (a) contains the compound (a2), the contained compound (a2) may be one kind or two or more kinds.

Examples of commercially available products that can be suitably used as the compound (a2) include ED-505 and ED-506 (The above are manufactured by ADEKA CORPORATION.); EPOLITE M-1230, EPOLITE EHDG-L, EPOLITE 40E, EPOLITE 100E, EPOLITE 200E, EPOLITE 400E, EPOLITE 70P, EPOLITE 200P, EPOLITE 400P, EPOLITE 1500NP, EPOLITE 1600, EPOLITE 80MF, EPOLITE 100MF, EPOLITE 4000, EPOLITE FR-1500 (The above are manufactured by KYOEISHA CHEMICAL Co., LTD.); SANTOHTO ST0000, YD-716, YH-300, PG-202, PG-207, YD-172, and YDPN638 (The above are manufactured by NIPPON STEEL Chemical & Material Co., Ltd.); DENACOL EX321, DENACOL EX313, DENACOL 314, DENACOL EX-411, and EM-150 (The above are manufactured by Nagase ChemteX Corporation); EPPN-201, EOCN-1020, and EPPN-501H (The above are manufactured by Nippon Kayaku Co., Ltd.); EHPE-3150, and EHPE-3150CE (The above are manufactured by Daicel Corporation); and others.

### [Other Compounds]

The component (a) may contain, in addition to the compounds (a1) and (a2), other compounds that cause polymerization or crosslinking reaction by light irradiation.

Examples of such other compounds include: aromatic epoxy compounds, such as a polyglycidyl ether of a polyhydric phenol having at least one aromatic ring (examples: bisphenol A and bisphenol F) or an alkylene oxide adducts thereof; oxetane compounds, such as ARONE OXETANE OXT-101, OXT-121, OXT-221, OXT-212, and OXT-211 (The above are manufactured by TOAGOSEI CO., LTD.), and ETERNACOLL EHO, OXBP, OXTP, and OXMA (The above are manufactured by Ube Industries, Ltd.); oxolane compounds, such as tetrahydrofuran and 2,3-dimethyltetrahydrofuran; cyclic acetal compounds, such as trioxane, 1,3-dioxolane, and 1,3,6-trioxanecyclooctane; cyclic lactone compounds, such as β-propiolactone and ε-caprolactone; thiirane compounds, such as ethylene sulfide and thioepichlorohydrin; cyclic thioether compounds, such as thietane compounds, including 1,3-propyne sulfide, 3,3-dimethylthietane, and others, and tetrahydrothiophene derivatives; vinyl ether compounds, such as ethylene glycol divinyl ether, an alkyl vinyl ether, 2-chloroethyl vinyl ether, 2-hydroxyethyl vinyl ether, triethylene glycol divinyl ether, 1,4-cyclohexanedimethanol divinyl ether, hydroxybutyl vinyl ether, and propenyl ether of propylene glycol; spiroorthoester compounds obtained by a reaction of an epoxy compound with a lactone; ethylenically unsaturated compounds, such as styrene, vinylcyclohexene, isobutylene, polybutadiene, and derivatives thereof. These compounds can be used one kind or two or more kinds.

Among them, aromatic epoxy compounds and oxetane compounds, which are readily available and convenient to handle, are preferable.

### [Cationic Polymerization Initiator (b)]

The polymerization initiator (b) is not particularly limited as long as it is a compound capable of being activated by light irradiation, and preferably a double salt that is an onium salt to release a Lewis acid by irradiation with ultraviolet rays or a derivative thereof.

The polymerization initiator (b) contained in the cation-polymerizable photocuring composition may be one kind or two or more kinds.

Specific examples of the polymerization initiator (b) include a salt of a cation and an anion represented by the formula [A]^{m+}[B]^{m-}.

The cation [A]^{m+} is preferably an onium, and the structure thereof can be represented by, for example, the formula [(R²⁰)ₐQ]^{m+}.

Here, R²⁰ is an organic group having 1 to 60 carbon atoms and optionally containing any number of atoms other than a carbon atom. "a" is an integer of 1 to 5. "a" R²⁰s may be the same as, or different from each other, and at least one of them is preferably an organic group having an aromatic ring. Q is an atom or an atomic group selected from the group consisting of S, N, Se, Te, P, As, Sb, Bi, O, I, Br, Cl, F, and N=N. When the valence of Q in the cation [A]^{m+} is "q", "m" is represented by "m = a - q" (However, it is considered that N=N has a valence of 0.).

The anion [B]^{m-} is preferably a halide complex, and the structure thereof can be represented by, for example, the formula [LX_{b}]^{m-}.

Here, L is a metal or a semimetal (metalloid) each of which is the center atom of the halide complex, and is specifically B, P, As, Sb, Fe, Sn, Bi, Al, Ca, In, Ti, Zn, Sc, V, Cr, Mn, Co, and others. X is a halogen atom. "b" is an integer of 3 to 7. When the valence of L in the anion [B]^{m-} is "p", "m" is represented by "m = b - p".

Specific examples of the anion [LX_{b}]^{m-} include tetrakis(pentafluorophenyl) borate (BF₄)⁻, tetrafluoroborate (BF₄)⁻, hexafluorophosphate (PF₆)⁻, hexafluoroantimonate (SbF₆)⁻, hexafluoroarsenate (AsF₆)⁻, and hexachloroantimonate (SbCl₆)⁻.

Another preferred example of the anion [B]^{m-} is an ion represented by the formula [LX_{b-1}(OH)]^{m-}. L, X, and "b" are the same as described above.

Other examples of the anion [B]^{m-} include: inorganic ions, such as perchlorate ion (ClO₄)⁻; sulfonate ions, such as fluorosulfonate ion (FSO₃)⁻, toluenesulfonate ion, trinitrobenzenesulfonate ion, camphorsulfonate ion, nonafluorobutanesulfonate ion, and hexadecafluorooctanesulfonate ion; borate ions, such as tetraarylborate ion and tetrakis(pentafluorophenyl) borate ion; carboxylate ions, such as methane carboxylate ion, ethanecarboxylate ion, propanecarboxylate ion, butanecarboxylate ion, octanecarboxylate ion, trifluoromethanecarboxylate ion, benzenecarboxylate ion, and p-toluenecarboxylate ion; trifluoromethyl sulfite ion (CF₃SO₃)⁻; methyl sulfate ion (CH₃OSO₃)⁻; bis(trifluoromethanesulfonyl) imide ion; and tris(trifluoromethanesulfonyl) methide ion.

As the polymerization initiator (b), it is particularly preferable to use the following aromatic onium salts (A) to (C). These may be used one kind or two or more kinds.
(A) aryldiazonium salts, such as phenyl diazonium hexafluorophosphate, 4-methoxy phenyl diazonium hexafluoroantimonate, and 4-methyl phenyl diazonium hexafluorophosphate
(B) diaryliodonium salts, such as diphenyliodonium hexafluoroantimonate, di(4-methylphenyl) iodonium hexafluorophosphate, di(4-tert-butylphenyl) iodonium hexafluorophosphate, and tolylcumyl iodonium tetrakis(pentafluorophenyl) borate
(C) sulfonium salts consisting of: a sulfonium cation represented by the following group I or group II; and a hexafluoroantimony ion, a tetrakis(pentafluorophenyl) borate ion, or others.

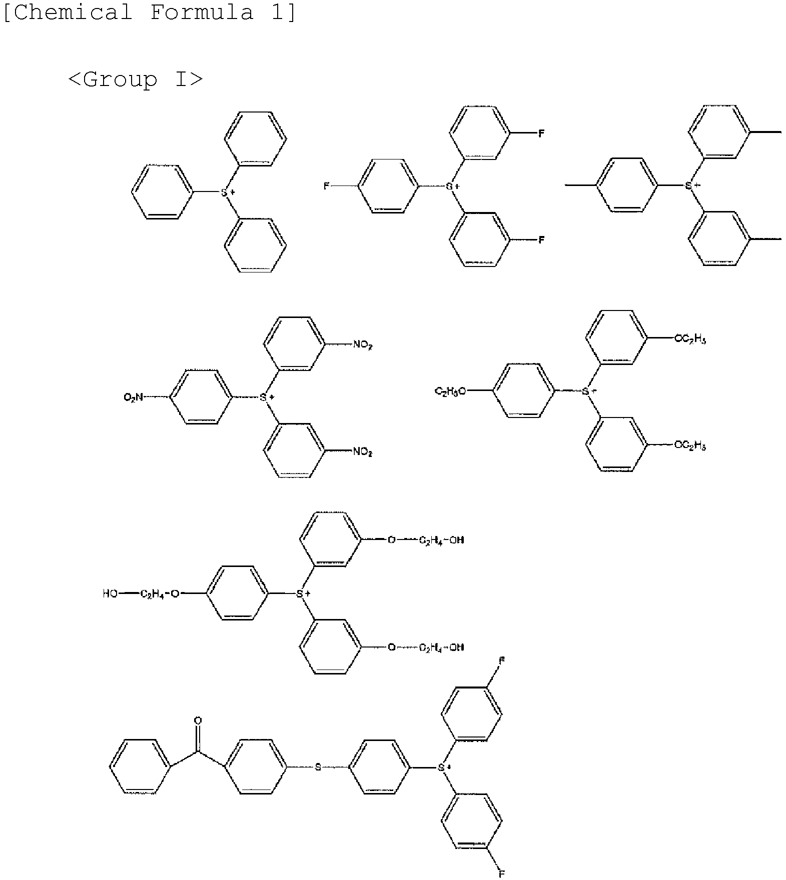

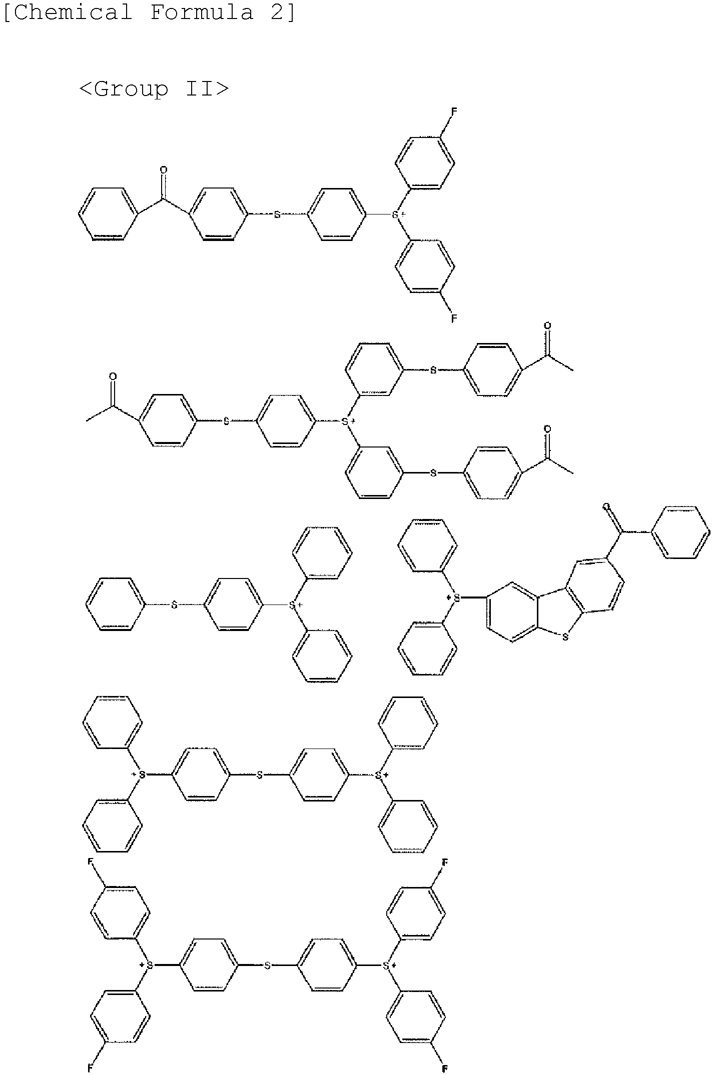

Other suitable examples of the polymerization initiator (b) include: an iron-arene complex, such as (η⁵-2,4-cyclopentadiene-1-yl) [(1,2,3,4,5,6-η)-(1-methylethyl) benzene]-iron-hexafluorophosphate; and a mixture of an aluminum complex, such as tris(acetylacetonate) aluminum, tris(ethylacetonateacetato) aluminum, and tris(salicylaldehydato) aluminum, with silanols, such as triphenylsilanol.

As the polymerization initiator (b), among them, an aromatic iodonium salt, an aromatic sulfonium salt, and an iron-arene complex are preferably used from the viewpoint of practical use and photosensitivity. An aromatic sulfonium salt represented by the following formula (V) is more preferable from the viewpoint of sensitivity.

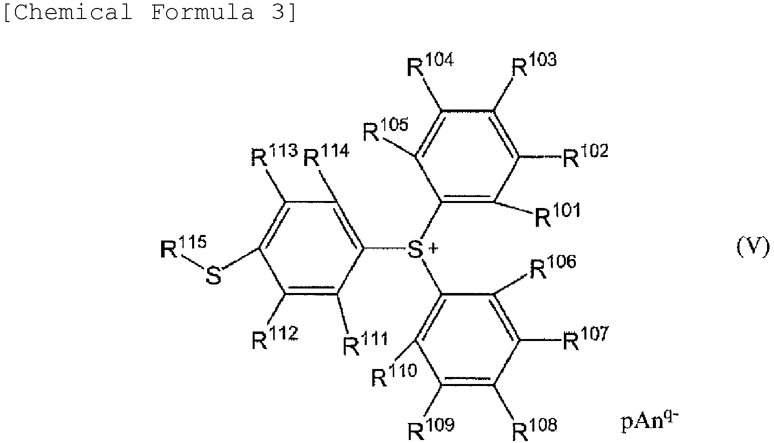

(R¹⁰¹ to R¹¹⁰ each independently represent a hydrogen atom, a halogen atom, an alkyl group having 1 to 10 carbon atoms, an alkoxy group having 1 to 10 carbon atoms, or an ester group having 2 to 10 carbon atoms; R¹¹¹ to R¹¹⁴ each independently represent a hydrogen atom, a halogen atom, or an alkyl group having 1 to 10 carbon atoms; R¹¹⁵ represents any substituent selected from the following (α) to (γ); An^{q-} represents a q-valent anion; and "p" represents a coefficient for neutralizing the charge.)

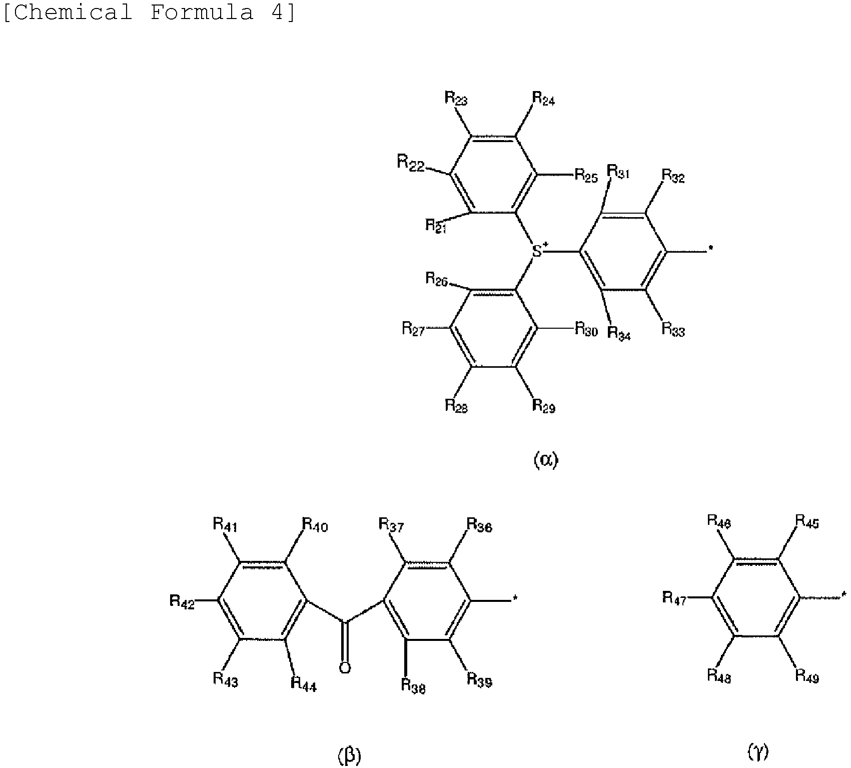

(R₂₁ to R₃₀ and R₄₅ to R₄₉ each independently represent a hydrogen atom, a halogen atom, or an organic group having 1 to 10 carbon atoms; R₃₁ to R₃₄ and R₃₆ to R₄₄ each independently represent a hydrogen atom, a halogen atom, or an organic group having 1 to 10 carbon atoms; and "*" represents a bond to an adjacent group at "*".)

Examples of the halogen atom represented by R₂₁ to R₃₄ and R₃₆ to R₄₉ include fluorine, chlorine, bromine, iodine, and others.

Examples of the organic group having 1 to 10 carbon atoms represented by R₂₁ to R₃₄ and R₃₆ to R₄₉ include methyl, ethyl, propyl, isopropyl, butyl, s-butyl, t-butyl, isobutyl, amyl, isoamyl, t-amyl, hexyl, cyclohexyl, heptyl, octyl, nonyl, ethyloctyl, 2-methoxyethyl, 3-methoxypropyl, 4-methoxybutyl, 2-butoxyethyl, methoxyethoxyethyl, methoxyethoxyethoxyethyl, 3-methoxybutyl, 2-methylthioethyl, fluoromethyl, difluoromethyl, trifluoromethyl, chloromethyl, dichloromethyl, trichloromethyl, bromomethyl, dibromomethyl, tribromomethyl, difluoroethyl, trichloroethyl, dichlorodifluoroethyl, pentafluoroethyl, heptafluoropropyl, nonafluorobutyl, decafluoropentyl, tridecafluorohexyl, pentadecafluoroheptyl, heptadecafluorooctyl, methoxymethyl, 1,2-epoxyethyl, methoxyethoxymethyl, methylthiomethyl, ethoxyethyl, butoxymethyl, t-butylthiomethyl, 4-pentenyloxymethyl, trichloroethoxymethyl, bis(2-chloroethoxy) methyl, methoxycyclohexyl, 1-(2-chloroethoxy) ethyl, 1-methyl-1-methoxyethyl, ethyldithioethyl, trimethylsilylethyl, t-butyldimethylsilyloxymethyl, 2-(trimethylsilyl) ethoxymethyl, t-butoxycarbonylmethyl, ethyloxycarbonylmethyl, ethylcarbonylmethyl, t-butoxycarbonylmethyl, acryloyloxyethyl, methacryloyloxyethyl, 2-methyl-2-adamantyloxycarbonylmethyl, acetylethyl, 2-methoxy-1-propenyl, hydroxymethyl, 2-hydroxyethyl, 1-hydroxyethyl, 2-hydroxypropyl, 3-hydroxypropyl, 3-hydroxybutyl, 4-hydroxybutyl, 1,2-dihydroxyethyl, methoxy, ethoxy, propyloxy, isopropyloxy, butyloxy, s-butyloxy, t-butyloxy, isobutyloxy, pentyloxy, isoamyloxy, t-amyloxy, hexyloxy, cyclohexyloxy, cyclohexylmethyloxy, tetrahydrofuranyloxy, tetrahydropyranyloxy, 2-methoxyethyloxy, 3-methoxypropyloxy, 4-methoxybutyloxy, 2-butoxyethyloxy, methoxyethoxyethyloxy, methoxyethoxyethoxyethyloxy, 3-methoxybutyloxy, 2-methylthioethyloxy, trifluoromethyloxy, methoxycarbonyl, ethoxycarbonyl, isopropyloxycarbonyl, phenoxycarbonyl, acetoxy, propionyloxy, butyryloxy, chloroacetyloxy, dichloroacetyloxy, trichloroacetyloxy, trifluoroacetyloxy, t-butylcarbonyloxy, methoxyacetyloxy, benzoyloxy, and others.

Examples of commercially available products that can be suitably used as the polymerization initiator (b) include: Cyracure UVI-6970, Cyracure UVI-6974, Cyracure UVI-6976, Cyracure UVI-6990, Cyracure UVI-6992 and Cyracure UVI-950 (The above are manufactured by Union Carbide Corporation, which is based in the US.); Irgacure 250, Irgacure 261, Irgacure 270, Irgacure PAG103, Irgacure PAG121, Irgacure PAG203, Irgacure PAG290, Irgacure CGI725, Irgacure CGI1380, Irgacure CGI1907 and Irgacure GSID26-1 (The above are manufactured by BASF.); SP-150, SP-151, SP-170, SP-171, and SP-172 (The above are manufactured by ADEKA CORPORATION.); DAICATII (manufactured by Daicel Corporation); UVAC1591 (manufactured by DAICEL-ALLNEX LTD.); CI-2481, CI-2734, CI-2823, and CI-2758 (The above are manufactured by Nippon Soda Co., Ltd.); FFC509 (manufactured by 3M); SAN-AID SI-45L, SAN-AID SI-60L, SAN-AID SI-80L, SAN-AID SI-100L, SAN-AID SI-110L, SAN-AID SI-150L, and SAN-AID SI-180L (The above are manufactured by SANSHIN CHEMICAL INDUSTRY CO., LTD.); BBI-102, BBI-103, BBI-105, BBI-106, BBI-109, BBI-110, BBI-201, BBI-301, BI-105, DPI-105, DPI-106, DPI-109, DPI-201, DTS-102, DTS-103, DTS-105, NDS-103, NDS-105, NDS-155, NDS-159, NDS-165, TPS-102, TPS-103, TPS-105, TPS-106, TPS-109, TPS-1000, MDS-103, MDS-105, MDS-109, MDS-205, MPI-103, MPI-105, MPI-106, MPI-109, DS-100, DS-101, MBZ-101, MBZ-201, MBZ-301, NAI-100, NAI-101, NAI-105, NAI-106, NAI-109, NAI-1002, NAI-1003, NAI-1004, NB-101, NB-201, NDI-101, NDI-105, NDI-106, NDI-109, PAI01, PAI-101, PAI-106, PAI-1001, PI-105, PI-106, PI-109, PYR-100, SI-101, SI-105, SI-106 and SI-109 (The above are manufactured by Midori Kagaku Co., Ltd.); KAYACURE PCI-204, KAYACURE PCI-205, KAYACURE PCI-615, KAYACURE PCI-625, Kayarad 220, Kayarad 620, PCI-061T, PCI-062T, PCI-020T, and PCI-022T (The above are manufactured by Nippon Kayaku Co., Ltd.); and others.

The polymerization initiator (b) is contained in an amount of preferably 0.1 to 10 mass% with respect to 100 mass% of the cation-polymerizable photocuring composition from the viewpoint that the obtained cation-polymerizable photocuring composition can be sufficiently cured, and that an oxygen barrier layer excellent in strength can be easily obtained, for example.

### [Additives]

The cation-polymerizable photocuring composition may be added with various additives, such as: antioxidants, such as phenol, sulfur, and phosphorus antioxidants; ultraviolet absorbers, such as benzotriazole, triazine, and benzoate ultraviolet absorbers; antistatic agents, such as cationic surfactants, anionic surfactants, nonionic surfactants, and amphoteric surfactants; flame retardants, such as halogen compounds, phosphate compounds, phosphoric amide compounds, melamine compounds, fluororesins, metal oxides, melamine (poly) phosphate, and piperazine (poly) phosphate; lubricants, such as hydrocarbon, fatty acid, aliphatic alcohol, aliphatic ester, aliphatic amide, or metal soap lubricants; colorants, such as pigments and carbon black; slicic acid inorganic additives, such as silica (including fumed silica, fine particle silica, and others), silica rock, diatomaceous earth, clay, kaolin, silica gel, calcium silicate, sericite, kaolinite, flint, feldspar powder, vermiculite, attapulgite, talc, mica, minnesotaite, and pyrophyllite; fillers, such as glass fiber and calcium carbonate; crystalizing agents, such as nucleating agents and crystal accelerators; coupling agents, such as silane coupling agents; rubber elasticity imparting agents, such as flexible polymers; chelators; sensitizers; other monomers; antifoaming agents; thickeners; leveling agents; plasticizers; polymerization inhibitors; antistatic agents; flow modifiers; adhesion promoters; antiseptic/fungicide agents; pH adjusters, as necessary, as long as the effect of the present invention is not impaired.

As these various additives, one kind may be used, and two or more kinds may be used.

These various additives are preferably contained in an amount of 50 mass% or less in total with respect to 100 mass% of the cation-polymerizable photocuring composition.

### [Method for Preparing Cation-Polymerizable Photocuring Composition]

The cation-polymerizable photocuring composition can be prepared by mixing each of the components. The mixing method is not particularly limited, and examples thereof include a method of mixing with a mixer, such as a homodisper, a homomixer, a universal mixer, a planetary mixer, a kneader, and a three-roll.

### [Oxygen barrier layer]

The thickness of the oxygen barrier layer is preferably 7 um or more, more preferably 8 um or more, and preferably 12 um or less, more preferably 11 um or less from the viewpoint that migration from the digital ink layer can be further suppressed, and that cracks that can occur in the oxygen barrier layer and further in the digital ink layer can be further suppressed, for example.

The oxygen barrier layer can be formed by applying the cation-polymerizable photocuring composition onto the tube container body and curing the composition. The tube container body can be coated, for example, by a known means, such as a roll coater, a curtain coater, various types of printing, and immersion.

Alternatively, it is possible to apply the cation-polymerizable photocuring composition onto a support base to temporarily form a film, followed by transferring the film onto the tube container body.

Before the oxygen barrier layer is formed on the tube container body, the tube container body may be subjected to a treatment such as corona discharge treatment, flame treatment, ultraviolet treatment, high frequency treatment, glow discharge treatment, active plasma treatment, and laser treatment.

The cation-polymerizable photocuring composition can be cured into a set-to-touch state or a solvent-insoluble state usually 0.1 seconds to several minutes after irradiating with light, preferably an active energy ray such as an ultraviolet ray.

In the light irradiation, it is preferable to use: electromagnetic wave energy having a wavelength of 2000 to 7000 Å obtained from an ultrahigh, high, medium, or low pressure mercury lamp, a xenon lamp, a carbon arc lamp, a metal halide lamp, a fluorescent lamp, a tungsten lamp, an excimer lamp, a germicidal lamp, excimer laser, nitrogen laser, argon ion laser, helium cadmium laser, helium neon laser, krypton ion laser, various semiconductor lasers, YAG laser, a light emitting diode, CRT light source, or others; or a high energy ray such as electron ray, X-ray, and a radiation.

The light irradiation time depends on: the intensity of light; the thickness of the oxygen barrier layer to be formed; and the composition to be used. The light irradiation time is usually about 0.1 seconds to 10 seconds.

In order to promote cationic polymerization, heating may be performed as necessary.

### <Digital Ink Layer>

Specific examples of the digital ink layer include a layer formed by digitally printing an ink.

The digital ink layer is formed on the oxygen barrier layer. In this case, the digital ink layer may be formed on the entire surface of the oxygen barrier layer, or may be formed on a part of the oxygen barrier layer.

The digital ink layer included in the present container may be two or more layers, but is usually one layer.

The thickness of the digital ink layer is preferably 2 um or more, more preferably 3 um or more, and preferably 16 um or less, more preferably 6 um or less in the viewpoint that it is possible to easily obtain a digital ink layer that hardly generates a crack, for example.

The ink to be used to form the digital ink layer is not particularly limited, and a conventionally known ink can be used. A solvent type ink having a low viscosity is preferable from the viewpoint of further exhibiting the effect of the present invention, for example.

The ink usually contains a polymerizable compound to be polymerized by light or others, a polymerization initiator, a colorant (examples: dyes and pigments), and a solvent, and may contain water, an additive described in the column of the oxygen barrier layer, and others, as necessary.

Note that the ink may be a standard type ink, in which the amount of a polymerization initiator is not adjusted, or may be a low migration type ink, in which the amount of a polymerization initiator is reduced. The latter is preferable, taking the amount of migration to the inner surface of the tube container body into consideration.

Examples of the low-migration type ink include an ink in which a polymerization initiator is contained in an amount of 5 mass% or less in the ink.

### Examples

Hereinafter, an embodiment of the present invention will be described more specifically with reference to Examples, but the present invention is not limited thereto.

### [Example 1]

Low-density polyethylene (for injection molding; manufactured by Prime Polymer Co., Ltd.) was charged into an injection molding machine. Injection molding was performed at 200°C using an injection molding mold capable of integrally forming a mouth part, a shoulder part, and a drum part as shown in Fig. 1. The drum part's end opposite to the head part side was welded at 350°C. Thus an injection-molded tube container body shown in Fig. 1, the head part and the drum part integrally molded, was obtained.

The thickness of the drum part of the obtained injection-molded tube container body was 0.7 mm, and the length of the drum part was 14.5 cm.

On the drum part of the obtained injection-molded tube container body, a cation-polymerizable ultraviolet-curing composition (PPG4511-801/A; manufactured by PPG JAPAN; containing an alicyclic epoxy compound and a cationic polymerization initiator) was applied with a roll coater so that the obtained oxygen barrier layer had a film thickness of 8 um. Thereafter, the coated surface of the composition was irradiated with an ultraviolet ray using a UV exposure machine so that the integrated light amount was 500 mJ/cm² (intensity: 600 mW/cm²) to form an oxygen barrier layer on the injection-molded tube container body.

Next, on the obtained oxygen barrier layer, a black digital ink (manufactured by TRITRON; low migration type) was digitally printed using a digital printer so that the obtained digital ink layer had a film thickness of 5 um. Thus a digital ink layer was formed on the oxygen barrier layer to produce a multilayer tube container.

### [Comparative Example 1]

On the injection-molded tube container body obtained in the same manner as in Example 1, a black digital ink (manufactured by TRITRON; standard type) was digitally printed using a digital printer so that the obtained digital ink layer had a film thickness of 5 um. Thus a digital ink layer was formed on the injection-molded tube container body to produce a multilayer tube container.

### [Comparative Example 2]

On the injection-molded tube container body obtained in the same manner as in Example 1, a black digital ink used in Example 1 was digitally printed using a digital printer so that the obtained digital ink layer had a film thickness of 5 um. Thus a digital ink layer was formed on the injection-molded tube container body to produce a multilayer tube container.

### [Comparative Example 3]

On the injection-molded tube container body obtained in the same manner as in Example 1, a black digital ink (manufactured by AGFA; low migration type) was digitally printed using a digital printer so that the obtained digital ink layer had a film thickness of 5 um. Thus a digital ink layer was formed on the injection-molded tube container body to produce a multilayer tube container.

### <Migration Test>

Using the multilayer tube containers obtained in Example 1 and Comparative Examples 1 to 3, components migrated to the inner surface (the surface of the layer most distant from the digital ink layer) of the tube container were measured by sqts (swiss quality testing services), which is an organization specialized in measuring the migration. The results are shown in Table 1.

Specifically, in accordance with "Swiss Regulation on Food Contact Materials SR 817.023.21 of 01.05.2017, Commission Regulation (EU) No 10/2011 of 14.01.2011" and "EN 1186 Materials and articles in contact with foodstuffs-Plastics, May 2002", which are standards relating to migration, the inner surface of the multilayer tube containers obtained in Example 1 and Comparative Examples 1 to 3 was exposed to 95% ethanol at 60°C for 10 days to measure the migration amount (primarily considered as an amount of the polymerization initiator, which is used for forming the digital ink layer, contained in the ethanol) [mg/dm² and mg/kg food]. Migration amount (mg/dm²) per 6 dm² is equivalent to migration amount (mg/kg food) per 1 kg of food.

In the EU, it is required to have a migration amount of 10 mg/dm² or less and 60 mg/kg food or less.

**[Table 1]**

| | Example 1 | Comparative Example 1 | Comparative Example 2 | Comparative Example 3 |
|---|---|---|---|---|
| Migration amount (mg/dm²) | 6 | 16 | 9 | 10 |
| Migration amount (mg/kg food) | 36 | 96 | 54 | 60 |

It is considered that a black digital ink is difficult to cure due to its color, and the polymerization initiator is most likely to remain in the obtained digital ink layer. However, according to an embodiment of the present invention, migration was sufficiently suppressed even when such a black digital ink was used.

The multilayer tube container obtained in Example 1 generated no crack even when it was squeezed to push out the contents.

### Reference Signs List

- 1: mouth part
- 2: drum part
- 3: shoulder part

## Claims

1. A multilayer tube container comprising
a tube container body comprising a low-density polyethylene,
the tube container comprising, on an outer surface of the tube container body: an oxygen barrier layer formed from a cation-polymerizable photocuring composition; and a digital ink layer, in this order from the tube container body side.

2. The multilayer tube container according to claim 1, wherein the cation-polymerizable photocuring composition comprises: a cation-polymerizable component (a) comprising an alicyclic epoxy compound; and a cationic polymerization initiator (b).

3. The multilayer tube container according to claim 1 or 2, wherein
the tube container body is a tube container comprising: a head part comprising a mouth part and a shoulder part; and a drum part continuing from the shoulder part,
the tube container being an injection-molded tube container in which the head part and the drum part are integrally molded.

4. The multilayer tube container according to claim 3, wherein the drum part of the tube container body has a thickness of 1.0 mm or less.

5. The multilayer tube container according to any one of claims 1 to 4, wherein the oxygen barrier layer has a thickness of 7 to 12 um.
